# EUROPÄISCHE PATENTSCHRIFT

(11) **EP 3 555 396 B1**
(45) Veröffentlichungstag und Bekanntmachung des Hinweises auf die Patenterteilung: **02.06.2021**
(21) Anmeldenummer: 16823257.7
(22) Anmeldetag: 19.12.2016
(51) Int. Cl.: E05D 5/02, F16B 7/04, F16B 7/18

(54) **BEFESTIGUNGSSYSTEM**
FASTENING SYSTEM
SYSTÈME DE MONTAGE

(43) Veröffentlichungstag der Anmeldung: 23.10.2019
(73) Patentinhaber: Dr. Hahn GmbH & Co. KG, 41189 Mönchengladbach (DE)
(72) Erfinder: NEETEN, Dominik, 41238 Mönchengladbach (DE); LENZE, Markus, 41334 Nettetal (DE)
(74) Vertreter: Kluin, Jörg-Eden
(86) Internationale Anmeldenummer: PCT/EP2016/081782
(87) Internationale Veröffentlichungsnummer: WO 2018/113906

(56) Entgegenhaltungen:
- EP-A1- 3 141 683
- WO-A1-2018/046140
- DE-U1- 9 113 522
- DE-U1- 20 204 175
- GB-A- 1 460 364

## Beschreibung

Die Erfindung betrifft ein Befestigungssystem mit einem Profil.

Derartige Befestigungsprofile sind bereits bekannt. Sie dienen beispielsweise dazu, ein Beschlagteil, bei dem es sich um den Teil eines Bandes zur Verbindung beispielsweise eines Türflügels mit einem Rahmen handeln kann, mit einem Profil zu verbinden.

Aus der nicht vorveröffentlichen EP 3 141 683 A1 ist ein Befestigungssystem für Bänder an einem Profi bekannt, bei dem ein Befestigungsstück mittels Schrauben und Klemmstücken an dem Profil befestigt ist und zur seitlichen Stabilisierung mit einem Vorsprung in eine Randnut eingeführt ist.

Aus der GB 1 460 364 A sind Bänder zur Anbringung an einem Kunststoffrahmen bekannt. Zur Befestigung der Bänder ist in den Kunststoffrahmen eine Schwalbenschwanznut eingearbeitet. Das Bandteil kann einen Vorsprung mit zwei Lippen aufweisen, die in die Nut spreizbar sind.

Die DE 91 13 522 U1 zeigt einen Beschlag zur Befestigung an einer beidseits Hinterschnitten Profilnut eines Rahmens, der aus einem auf die Nutränder aufsetzbaren Befestigungsteil und einem daran mittels einer Schraube gelagerten Klemmteil besteht.

Aus der DE 202 04 175 U1 ist ein Scharnier bekannt, bei dem das Klemmstück Zähne aufweist.

Nachteilig bei bekannten Befestigungssystemen ist, dass sie oft nicht wünschenswert einfach montierbar sind und/oder keine wünschenswert belastbare Befestigung des Befestigungsstücks an dem Profil bewirken und/oder aufwändig herzustellen sind.

Die Erfindung hat es sich zur Aufgabe gemacht, ein Befestigungssystem zu schaffen, das zumindest hinsichtlich eines der genannten Nachteile verbessert ist.

Diese Aufgabe wird durch das in Anspruch 1 wiedergegebene Befestigungssystem gelöst.

Das erfindungsgemäße Befestigungssystem weist ein Profil auf. Und es ist ein Befestigungsstück vorgesehen, sowie mindestens zwei Klemmstücke. Das Befestigungssystem umfasst zudem mindestens zwei jeweils in einer Kraftrichtung wirkende Befestigungsmittel, die mit den Klemmstücken zusammenwirken. Das Profil stellt erste Anlageflächen für die Klemmstücke bereit und das Befestigungsstück stellt zweite Anlageflächen für die Klemmstücke bereit.

Das Profil stellt zudem mindestens eine Anlagefläche - bevorzugt mindestens zwei Anlageflächen - für das Befestigungsstück bereit.

Das Befestigungsstück weist mindestens einen Vorsprung auf, der diese Anlagefläche des Profils für das Befestigungsstück hintergreift. Bevorzugt sind zwei Vorsprünge vorgesehen, die weiter bevorzugt jeweils eine Anlagefläche des Profils für das Befestigungsstück hintergreifen. Hierdurch ist eine Voraussetzung dafür geschaffen, dass die Stabilität des Profils erhöht werden kann, indem etwa ein Spreizen des Profils vermieden ist. Diese Anlagefläche des Profils für das Befestigungsstück kann bevorzugt auch als Befestigungsstückanlagefläche bezeichnet werden.

Mit dem Begriff "Hintergreifen" ist im Rahmen dieser Druckschrift insbesondere ein Umgreifen gemeint, bevorzugt derart, dass Zugkräfte von dem Befestigungsstück auf das Profil bewirkbar sind.

Das Profil weist eine Nut auf. Diese Nut kann bevorzugt auch als Hauptnut bezeichnet werden. Das Profil weist mindestens eine hiervon verschiedene Randnut auf, die an einer Seitenwand der Nut angeordnet ist. Die Öffnung der Randnut weist bezogen auf die Hauptnut nicht nach innen, sondern nach außen. Die Öffnung der Randnut weist bevorzugt von dem Nutgrund der Hauptnut weg. Der mindestens eine Vorsprung greift in die mindestens eine Randnut ein. In dem der Vorsprung des Befestigungsstücks in eine nach außen öffnende Randnut des Profils eingreift, kann das Befestigungsstück von außen auf das Profil aufgesetzt werden, wodurch die Montage erleichtert ist.

Die beiden Seitenwände der mindestens einen Randnut sind bevorzugt parallel zueinander und weiter bevorzugt parallel zu den Seitenwänden der Hauptnut angeordnet. Bevorzugt weist das Profil mindestens zwei und vorzugsweise genau zwei von der Hauptnut verschiedene, vorzugsweise gegenüberliegende Randnuten auf, die bevorzugt jeweils an einer Seitenwand der Hauptnut angeordnet sind, und deren Öffnung bevorzugt jeweils der Profilaußenseite zugewandt ist. Jeder Vorsprung greift bevorzugt in genau eine Randnut ein.

Die Befestigungsstückanlagefläche ist also durch eine Randnut bereitgestellt und zwar besonders bevorzugt durch eine der Innenseite der Randnut zugewandten Seite einer Wand der Randnut.

Bevorzugt ist das Befestigungsstück, bezogen auf die Hauptnut, weiter außen angeordnet, als die Klemmstücke.

Bevorzugt ist das Befestigungsstück derart ausgeformt, dass es Kräfte, die ein Aufspreizen der Hauptnut verhindern, in das Profil einleitet. Hierdurch kann die Belastbarkeit des Profils und des Befestigungssystems gesteigert werden. Die Kräfte, die ein Aufspreizen der Nut verhindern, werden von dem Befestigungsstück bevorzugt mittels des mindestens einen Vorsprungs - bevorzugt der Vorsprünge - des Befestigungsstücks in das Profil eingeleitet.

Bevorzugt ist das Befestigungsstück derart ausgeformt, dass es Kräfte, die ein Zusammendrücken der Hauptnut verhindern, in das Profil einleitet. Hierdurch kann die Belastbarkeit des Profils und des Befestigungssystems gesteigert werden. Die Kräfte, die ein Zusammendrücken der Hauptnut verhindern, werden bevorzugt mittels der Klemmstücke von dem Befestigungsstück in das Profil eingeleitet.

In einer Ausführungsform werden Kräfte, die ein Zusammendrücken der Hauptnut verhindern, bevorzugt mittels der Vorsprünge des Befestigungsstücks von dem Befestigungsstück in das Profil eingeleitet.

In einer anderen Ausführungsform werden keine Kräfte, die ein Zusammendrücken der Hauptnut verhindern, mittels des mindestens einen Vorsprungs des Befestigungsstücks von dem Befestigungsstück in das Profil eingeleitet. Dies hat den Vorteil, dass der Vorsprung, wie bevorzugt, nur an einer der beiden Nutwände der Randnut, in die er bevorzugt eingreift, anliegen muss beziehungsweise anliegt und daher beispielsweise die Breite des Vorsprungs nicht mit hoher Genauigkeit an die Breite der Randnut angepasst sein muss.

Bevorzugt liegt der mindestens eine Vorsprung des Befestigungsstücks an dem Nutgrund der mindestens einen Randnut auf. Bevorzugt liegen beide Vorsprünge des Befestigungsstücks jeweils an dem Nutgrund der zugehörigen Randnut auf. Die Seitenwände der mindestens einen Randnut verlaufen bevorzugt parallel zueinander. Die Seitenwände der mindestens einen Randnut verlaufen bevorzugt senkrecht zu dem Nutgrund der mindestens einen Randnut.

Bevorzugt überbrückt das Befestigungsstück die Öffnung der Nut. Bevorzugt ist zur Befestigung des Befestigungsstücks an dem Profil kein weiteres, diese Nutöffnung überbrückendes Bauelement vorgesehen, bevorzugt jedenfalls kein weiteres starres Bauelement. Hiermit ist bevorzugt gemeint, dass - vorzugsweise mit Ausnahme des Befestigungsstücks - kein weiteres Element vorgesehen ist, welches Kräfte von einer Seitenwand der Hauptnut auf die andere Seitenwand der Hauptnut überträgt.

Bevorzugt weist das Befestigungsstück mindestens eine Befestigungsstücknut auf, besonders bevorzugt mindestens zwei oder genau zwei. In die Befestigungsstücknut greift mit Vorteil das Profil ein. Bevorzugt greift in die Befestigungsstücknut jeweils eine Seitenwand der Randnut ein. Im montierten Zustand des Befestigungsstücks an dem Profil verlaufen die Wände der Befestigungsstücknut mit Vorteil parallel zu den Wänden der mindestens einen Randnut des Profils und die Öffnung der Befestigungsstücknut weist - bezogen auf die Hauptnut des Profils - nach innen. Hierdurch kann die Belastbarkeit der Verbindung zwischen Befestigungsstück und Profil weiter gesteigert werden.

Mit Vorteil verläuft die mindestens eine Anlagefläche des Profils parallel zu den Seitenwänden der Nut. Bevorzugt verläuft die Befestigungsstückanlagefläche senkrecht zur Ebene der Öffnung der Hauptnut und weiter bevorzugt parallel zur Kraftrichtung der Befestigungsmittel.

Die Randnut ist bevorzugt durch einen "L"-förmigen Vorsprung gebildet, der bevorzugt aus einer Seitenwand der Hauptnut entspringt. Bereiche beider Seitenwände der Hauptnut bilden bevorzugt also gleichzeitig jeweils eine Seitenwand der Randnuten.

Es ist bevorzugt ein elastisches Element vorgesehen, das auf die Klemmstücke wirkt.

Das System dient zur Befestigung des Befestigungsstücks an dem Profil.

Durch das elastische Element kann eine besonders einfache Montierbarkeit des Befestigungssystems gegeben sein.

Das Befestigungsstück kann ein Bandteil sein. In einer Ausführungsform ist es kein Bandteil. In einer denkbaren Ausführungsform ist es ein nicht zur Befestigung eines Bandes dienendes Beschlagteil.

Mit Vorteil umfasst das Befestigungssystem genau ein elastisches Element. Bevorzugt wirkt das elastische Element auf beide Klemmstücke.

Die Befestigungsmittel umfassen mit Vorteil jeweils eine Befestigungsschraube oder sind durch eine Befestigungsschraube gebildet. Denkbar ist auch, dass die Befestigungsmittel einen Niet, etwa Blindniet, umfassen oder jeweils hierdurch gebildet sind. Genau ein Befestigungsmittel wirkt bevorzugt jeweils mit genau einem Klemmstück zusammen. Jedes Klemmstück weist zu diesem Zweck bevorzugt eine Gewindebohrung auf.

Die Wirkung des elastischen Elements auf die Klemmstücke kann durch ein weiteres Element oder weitere Elemente vermittelt sein, etwa das oder die Befestigungsmittel. Das elastische Element kann also auf das oder die Befestigungsmittel wirken, das beziehungsweise die diese Wirkung auf die Klemmstücke übertragen können.

Das Profil umfasst bevorzugt Aluminium.

Die Klemmstücke umfassen bevorzugt härteres Material, als das Profil. Die Klemmstücke umfassen in einer Ausführungsform Stahl.

Bevorzugt durchgreifen die Befestigungsmittel das Befestigungsstück.

Wenn das elastische Element zwischen den Klemmstücken wirkt, dann kann auf besonders einfache und wirkungsvolle Weise eine vorteilhafte Montierbarkeit des Systems erreicht sein. Mit Vorteil zieht das elastische Element die Klemmstücke elastisch zusammen.

Vorzugsweise umfassen die zweiten Anlageflächen schräge Führungsflächen für die Klemmstücke. Die Führungsflächen sind mit Vorteil derart schräg, dass sie nicht parallel und vorzugsweise auch nicht senkrecht zur Kraftrichtung der Befestigungsmittel verlaufen. Bevorzugt nimmt der Abstand der Führungsflächen - im montierten Zustand des Systems - mit zunehmender Tiefe in das Profil hinein jeweils zu dem Befestigungsmittel zu, das mit dem Klemmstück zusammenwirkt, für das die Führungsflächen eine Anlagefläche bereitstellen. Die Führungsflächen können plan oder gekrümmt sein. Wenn sie gekrümmt sind, sind sie bevorzugt konvex.

Mit dem Begriff "Kraftrichtung der Befestigungsmittel" ist im Rahmen dieser Druckschrift insbesondere die Richtung der durch diese Befestigungsmittel bewirkten Hauptkraft gemeint, bevorzugt im vollständig montierten Zustand des Systems. Im Falle von Befestigungsschrauben ist hiermit insbesondere die Richtung von deren Achse gemeint, die auf das Befestigungsstück zu gerichtet ist, bevorzugt im vollständig montierten Zustand des Systems. Die Kraftrichtung verläuft im montierten Zustand des Systems bevorzugt senkrecht zu der gedachten Ebene, in der die Öffnung der Nut des Profils liegt.

Mit Vorteil sind die Klemmstücke jeweils an ihrer der zweiten Anlagefläche zugewandten Seite keilförmig ausgebildet. Vorzugsweise weisen die Klemmstücke also jeweils an ihrer der zweiten Anlagefläche zugewandten Seite eine schräge Gegenführungsfläche auf. Die Gegenführungsfläche ist mit Vorteil derart schräg, dass sie nicht parallel und vorzugsweise auch nicht senkrecht zur Kraftrichtung der Befestigungsmittel verläuft. Hierdurch kann eine Verlagerbarkeit der Klemmstücke von einer Montageposition in eine Halteposition verbessert sein.

Zudem kann hierdurch mit Vorteil eine Voraussetzung für das Bewirken von Klemmkräften und/oder Spreizkräften durch die Klemmstücke geschaffen sein. Die schräge Gegenführungsfläche kann Zähne, etwa Keilzähne, umfassen oder hierdurch gebildet sein.

Wenn das elastische Element derart ausgebildet ist, dass es die Positionierung der Klemmstücke zueinander in eine Montageposition bewirkt, dann kann das System besonders einfach montierbar sein. Denn das elastische Element kann in dieser Ausführungsform den Monteur von der Aufgabe entlasten, die Klemmstücke, etwa während des Zusammenfügens des Befestigungsstücks mit dem Profil, in einer Montageposition zu halten.

Wenn das elastische Element die Verlagerung der Klemmstücke in eine Halteposition zulässt, dann ist erneut eine Voraussetzung für eine besonders einfache Montierbarkeit des Systems geschaffen. Denn der Monteur muss in diesem Falle nicht etwa, beispielsweise nach erfolgtem Zusammenfügen des Befestigungsstücks mit dem Profil, das elastische Element entfernen. Das elastische Element lässt die Verlagerung der Klemmstücke bevorzugt während des Befestigens der Befestigungsmittel in eine Halteposition zu.

Mit dem Begriff "Montageposition der Klemmstücke" ist im Rahmen dieser Druckschrift insbesondere die Position der Klemmstücke - bevorzugt zueinander - im noch nicht montierten Zustand bezeichnet, die das Zusammenfügen des Befestigungsstücks mit dem Profil ermöglicht und/oder erleichtert.

Mit dem Begriff "Halteposition der Klemmstücke" ist im Rahmen dieser Druckschrift insbesondere die Position der Klemmstücke gemeint, die diese im vollständig montierten Zustand des Befestigungssystems einnehmen.

Das Profil weist mit Vorteil eine Nut auf. Die ersten Anlageflächen sind bevorzugt durch Seitenwände dieser Nut bereitgestellt. Mit Vorteil sind in dieser Nut im montierten Zustand des Systems die zwei Klemmstücke nebeneinander angeordnet. Diese zwei Klemmstücke sind im montierten Zustand bevorzugt also nicht in Längsrichtung des Profils nebeneinander angeordnet, sondern senkrecht hierzu.

Der Abstand der zwei Klemmstücke in Montageposition zueinander ist bevorzugt kleiner, als die Breite der Öffnung der Nut, so dass diese Klemmstücke mit Vorteil ohne weiteres in Montagerichtung des Zusammenfügens von Klemmstück und Profil in die Nut einführbar sind.

Der Abstand von zumindest Bereichen von zwei nebeneinander in der Nut angeordneten Klemmstücken in deren Halteposition ist mit Vorteil größer, als die Breite der Öffnung der Nut. Auf diese Weise ist bevorzugt eine Wechselwirkung zwischen den in ihrer Halteposition befindlichen Klemmstücken und der Nut, etwa ein Hintergriff, möglich.

Mit Vorteil sind die zweiten Anlageflächen so ausgebildet, dass mit ihrer Hilfe die Verlagerung der Klemmstücke von einer Montageposition in eine Halteposition durch Befestigen der Befestigungsmittel bewirkbar ist. Mit Vorteil ist diese Verlagerung ausschließlich durch Befestigen der Befestigungsmittel bewirkbar. Mit Vorteil ändert sich bei dieser Verlagerung der Abstand der Klemmstücke zueinander, vorzugsweise vergrößert er sich. Mit Vorteil findet bei dieser Verlagerung eine Verkippung der Klemmstücke statt, bevorzugt derart, dass sich der Abstand der weiter von dem Befestigungsstück entfernten Bereiche der Klemmstücke stärker vergrößert, als der Abstand der näher an dem Befestigungsstück angeordneten Bereiche der Klemmstücke. Mit dem Begriff "Befestigen der Befestigungsmittel" ist beispielsweise bei einer Schraube als Befestigungsmittel deren Festschrauben gemeint, bevorzugt bis diese die gewünschte Hauptkraft (hier Zugkraft) bewirkt. Indem die Verlagerung bevorzugt durch Befestigen der Befestigungsmittel bewirkbar ist, vorzugsweise also keine weitere Handlung hierfür nötig ist, ist eine Vereinfachung der Montage erreicht.

In einer wichtigen Ausführungsform weisen die Klemmstücke Zähne auf. Die Längserstreckung der Zähne verläuft mit Vorteil parallel zur Kraftrichtung der Befestigungsmittel. Die Zähne weisen bevorzugt eine keilförmige Außenkontur auf, bevorzugt derart, dass sie in weiter von dem Befestigungsstück entfernten Bereichen weiter von den Klemmstücken hervorspringen, als in näher an dem Befestigungsstück angeordneten Bereichen.

Die Keilform der Klemmstücke kann ganz oder teilweise durch die Zähne bewirkt sein. In einer Ausführungsform sind also nicht die Klemmstücke als solche jeweils bereits keilförmig sondern diese Form erlangen sie erst durch die Zähne.

Durch die Zähne ist mit Vorteil ein Formschluss bewirkbar. Der Formschluss wirkt bevorzugt zwischen den Klemmstücken und dem Befestigungsstück und weiter bevorzugt zwischen den Klemmstücken und dem Profil. Der Formschluss wirkt also bevorzugt zwischen dem Befestigungsstück und dem Profil, vorzugsweise vermittelt durch ein Klemmstück.

Die Zähne greifen im montierten Zustand bevorzugt in die zweite Anlagefläche. In einer Ausführungsform greifen die Zähne im montierten Zustand in die erste Anlagefläche. Mit Vorteil sind durch Befestigen der Befestigungsmittel mittels der Zähne Furchen in den ersten Anlageflächen und/oder den zweiten Anlageflächen bewirkbar, mit denen sich die Zähne mit Vorteil formschlüssig verzahnen.

In einer Ausführungsform sind an den Klemmstücken Halterungen für das elastische Element vorgesehen. Bei dem elastischen Element kann es sich um einen Ring aus elastischem Material, beispielsweise einen Gummiring, etwa einen so genannten O-Ring, handeln. Die Halterungen können Vorsprünge umfassen, an denen das elastische Element anliegen kann. Die Vorsprünge können in Vertiefungen der Klemmstücke angeordnet sein, in einer Ausführungsform derart, dass sie nicht über die Außenkontur der Klemmstücke hervor stehen. Die Vertiefungen der Klemmstücke können einander zugewandt sein. Die Halterungen können Köpfe aufweisen, gegen ein Abrutschen des elastischen Elements.

In einer Ausführungsform sind die Klemmstücke jeweils an zwei gegenüberliegenden Seiten keilförmig ausgebildet und/oder die ersten und zweiten Anlageflächen laufen in Kraftrichtung aufeinander zu. Hierdurch kann eine Voraussetzung dafür geschaffen sein, dass die Klemmstücke - mit Vorteil in ihrer Halteposition - jeweils Spreizkräfte zwischen einer ersten Anlagefläche und einer zweiten Anlagefläche bewirken.

Die Spreizkraft kann - insbesondere in der Ausführungsform, in der die Keilform der Klemmstücke ganz oder teilweise durch die Zähne bewirkt ist - ausschließlich oder teilweise durch die Zähne bewirkt sein.

Mit Vorteil ist ein Kraftschluss bewirkbar zwischen den Klemmstücken und den ersten Anlageflächen und bevorzugt zwischen den Klemmstücken und den zweiten Anlageflächen. Bevorzugt ist also ein Kraftschluss bewirkbar, zwischen dem Befestigungsstück und dem Profil, vorzugsweise vermittelt durch ein Klemmstück.

Der Kraftfluss dieses Kraftschlusses verläuft mit Vorteil nicht durch das Befestigungsmittel. Hierdurch kann eine Entlastung des Befestigungsmittels erreicht sein.

Mit Vorteil ist während des Befestigens der Befestigungsmittel eine Relativbewegung zwischen den Zähnen der Klemmstücke und den Anlageflächen bewirkbar, bevorzugt auch dann, wenn die Zähne bereits in Kontakt mit den Anlageflächen sind. Hierdurch ist mit Vorteil ein Furchen der Zähne in die Anlageflächen bewirkbar. Die Zähne weisen mit Vorteil eine spitz zulaufende Außenkontur auf, so dass sich eine besonders gute Furch-Wirkung ergibt.

In einer Ausführungsform verlaufen Bereiche der ersten Anlageflächen parallel zur Kraftrichtung der Befestigungsmittel oder die ersten Anlageflächen verlaufen vollständig parallel zur Kraftrichtung der Befestigungsmittel. Es hat sich gezeigt, dass auch bei derartigen Anlageflächen eine Fixierung der Klemmstücke in Richtung der Kraftrichtung der Befestigungsmittel bewirkbar ist.

Grundsätzlich ist denkbar, dass Bereiche der zweiten Anlageflächen parallel zur Kraftrichtung der Befestigungsmittel verlaufen oder die zweiten Anlageflächen vollständig parallel zur Kraftrichtung der Befestigungsmittel verlaufen.

In einer Ausführungsform weist das Befestigungsstück mindestens einen Vorsprung auf, der eine parallel zur Kraftrichtung der Befestigungsmittel verlaufende Anlagefläche des Profils hintergreift. Der Vorsprung erstreckt sich mit Vorteil ebenfalls parallel zur Kraftrichtung des Befestigungsmittels. Mit Vorteil hintergreift das Befestigungsstück also die diese Flächen bereitstellenden Profilbereiche. Hierdurch können Spreizkräfte des Klemmstücks abgestützt sein und/oder ein Einklemmen dieser Bereiche des Profils zwischen dem Klemmstück und dem Vorsprung des Befestigungsstücks bewirkbar sein.

In einer Ausführungsform weisen die Klemmstücke an ihrer - insbesondere in ihrer Halteposition - der ersten Anlagefläche zugewandten Seite eine Schulter auf.

Die Schulter kann bevorzugt auch als Nase oder Vorsprung bezeichnet werden.

Insbesondere in dieser Ausführungsform verlaufen zumindest Bereiche der ersten Anlagefläche mit Vorteil senkrecht zur Kraftrichtung der Befestigungsmittel. Mit Vorteil sind diese Bereiche durch die Schulter in der Halteposition der Klemmstücke hintergriffen. Die Klemmstücke können auch in diesem Ausführungsbeispiel, insbesondere an ihren den zweiten Anlageflächen zugewandten Seiten und/oder an ihren den ersten Anlageflächen zugewandten Seiten, Zähne aufweisen.

Der Keilwinkel der Keilform der Klemmstücke ist in einer Ausführungsform kleiner als 45°.

In einer Ausführungsform weisen die Klemmstücke an verschiedenen - bevorzugt gegenüberliegenden - Seiten Zähne auf.

In einer Ausführungsform weisen die Klemmstücke unterschiedliche Zähne auf. Bevorzugt weisen die Klemmstücke auf verschiedenen Seiten unterschiedliche Zähne auf. Hierdurch kann den auf verschiedenen Seiten der Klemmstücke mit Vorteil vorherrschenden unterschiedlichen Anforderungen an die Zähne Rechnung getragen werden.

Bevorzugt sind auf einer Seite der Klemmstücke - vorzugsweise der im montierten Zustand der zweiten Anlagefläche zugewandten Seite - erste Zähne vorgesehen, deren Längserstreckung mit Vorteil parallel zur Kraftrichtung der Befestigungsmittel verläuft und die weiter bevorzugt eine keilförmige Außenkontur aufweisen, bevorzugt derart, dass sie in weiter von dem Befestigungsstück entfernten Bereichen weiter von den Klemmstücken hervorspringen, als in näher an dem Befestigungsstück angeordneten Bereichen. Mit Vorteil bewirken diese ersten Zähne die auf dieser Seite der Klemmstücke bevorzugt realisierte Keilform der Klemmstücke oder halten sie aufrecht. Weiter bevorzugt bewirken diese ersten Zähne Spreizkräfte bzw. es erfolgt mit ihrer Hilfe die Verlagerung der Klemmstücke von der Montageposition in die Halteposition. Die ersten Zähne können auch als "Keilzähne" bezeichnet werden.

Auf einer anderen, bevorzugt der gegenüberliegenden und besonders bevorzugt der Seite der Klemmstücke, an der sie eine Schulter aufweisen, weisen die Klemmstücke mit Vorteil zweite Zähne auf, die keine Keilform der Klemmstücke bewirken oder aufrechterhalten. Diese zweiten Zähne entspringen bevorzugt von der Schulter der Klemmstücke, genauer gesagt vorzugsweise aus der Fläche der Schulter, mit der diese zumindest Bereiche der ersten Anlagefläche hintergreift, die mit Vorteil senkrecht zur Kraftrichtung der Befestigungsmittel verlaufen. Diese zweiten Zähne zeigen mit Vorteil in Richtung der Kraftrichtung der Befestigungsmittel. Bei einem Befestigen der Befestigungsmittel werden diese zweiten Zähne mit Vorteil senkrecht auf diese erste Anlagefläche zu bewegt und graben sich weiter bevorzugt in diese ein. Hierdurch wird bevorzugt ein Formschluss und/oder Kraftschluss zwischen Klemmstück und Profil bewirkt. Die zweiten Zähne können auch als "Senkrechtzähne" bezeichnet werden.

In einer Ausführungsform weisen die Klemmstücke an einer Seite - bevorzugt an der der zweiten Anlagefläche zugewandten Seite - Zähne auf, die an dieser Seite der Klemmstücke mit Vorteil eine Keilform der Klemmstücke bewirken oder aufrechterhalten. Bei diesen Zähnen kann es sich um Keilzähne handeln. Weiter bevorzugt weisen die Klemmstücke an der gegenüberliegenden Seite eine Schulter auf, mit der bevorzugt Bereiche der ersten Anlagefläche hintergriffen sind, die weiter bevorzugt senkrecht zur Kraftrichtung der Befestigungsmittel verlaufen. Hierdurch kann unter anderem der folgende Vorteil erzielt werden: Mithilfe der die Keilform bewirkenden oder aufrechterhaltenden Zähne kann eine zuverlässige Verlagerung der Klemmstücke von der Montageposition in die Halteposition und Sicherung in der Halteposition erfolgen, ohne dass in Kraftrichtung der Befestigungsmittel ein definierter Anschlag für die Klemmstücke an dem Befestigungsstück bereitgestellt wird. Denn die eine Keilform bewirkenden oder aufrechterhaltenden Zähne können sich je nach Fertigungstoleranzen geringfügig weiter oder weniger weit in das Befestigungsstück eindrücken. Hierdurch kann gewährleistet sein, dass die durch die Befestigungsmittel auf die Klemmstücke ausgeübte Kraft zu einem sehr großen Anteil über die Schulter auf das Profil übertragen wird und dort zu der erwünschten Klemmung führt. Es hat sich gezeigt, dass es zur Erzielung dieses Effekts hilfreich ist, wenn, wie bevorzugt, der Keilwinkel der Keilform der Klemmstücke kleiner als 45° ist. Wie oben bereits ausgeführt, können auch an der Schulter Zähne, etwa Senkrechtzähne, vorgesehen sein.

In einer Ausführungsform liegen die Klemmstücke sowohl in ihrer Montageposition, als auch in ihrer Halteposition an den zweiten Anlageflächen an.

In einer grundsätzlich denkbaren weiteren Ausführungsform liegen die Klemmstücke nur in ihrer Montageposition an den zweiten Anlageflächen an und stützen sich in ihrer Halteposition lediglich an den ersten Anlageflächen ab.

Die Klemmstücke sind in einer Ausführungsform jeweils an ihrer der zweiten Anlagefläche zugewandten Seite keilförmig ausgebildet.

Wenn die Klemmstücke jeweils an ihrer der zweiten Anlagefläche zugewandten Seite keilförmig ausgebildet sind, dann weisen die Klemmstücke vorzugsweise also jeweils an ihrer der zweiten Anlagefläche zugewandten Seite eine schräge Gegenführungsfläche auf. Die Gegenführungsfläche ist mit Vorteil derart schräg, dass sie nicht parallel und vorzugsweise auch nicht senkrecht zur Kraftrichtung der Befestigungsmittel verläuft. Hierdurch kann eine Verlagerbarkeit der Klemmstücke von einer Montageposition in eine Halteposition verbessert sein.

Zudem kann hierdurch mit Vorteil eine Voraussetzung für das Bewirken von Klemmkräften und/oder Spreizkräften durch die Klemmstücke geschaffen sein. Die schräge Gegenführungsfläche kann Zähne, etwa Keilzähne, umfassen oder hierdurch gebildet sein.

Die Klemmstücke können jeweils an zwei gegenüberliegenden Seiten keilförmig ausgebildet sein und/oder die ersten und zweiten Anlageflächen können in Kraftrichtung aufeinander zu laufen. Hierdurch kann eine Voraussetzung dafür geschaffen sein, dass die Klemmstücke - mit Vorteil in ihrer Halteposition - jeweils Spreizkräfte zwischen einer ersten Anlagefläche und einer zweiten Anlagefläche bewirken.

Die Erfindung soll nun anhand von zwei in den Zeichnungen gezeigten Ausführungsbeispielen näher erläutert werden. Es zeigen:
- Fig. 1: eine Querschnittsdarstellung eines ersten Ausführungsbeispiels eines erfindungsgemäßen Systems in noch nicht montiertem und noch nicht zusammengefügtem Zustand des Profils und des Befestigungsstücks;
- Fig. 2: eine Darstellung wie in Fig. 1 in bereits zusammengefügtem, jedoch noch nicht befestigtem Zustand;
- Fig. 3: eine Darstellung wie in Fig. 1 in zusammengefügtem und befestigtem Zustand;
- Fig. 3a: ein Detail aus Fig. 3 in etwas größerem Maßstab;
- Fig. 4 bis 6: ein Klemmstück in drei Ansichten;
- Fig. 7: eine perspektivische Darstellung eines Klemmstücks in vergrößertem Maßstab;
- Fig. 8: ein weiteres Ausführungsbeispiel in perspektivischer Darstellung und größerem Maßstab;
- Fig. 9: eine Querschnittsdarstellung eines weiteren Ausführungsbeispiels eines erfindungsgemäßen Systems in noch nicht montiertem und noch nicht zusammengefügtem Zustand des Profils und des Befestigungsstücks;
- Fig. 10: eine Darstellung wie in Fig. 9 in bereits zusammengefügtem, jedoch noch nicht befestigtem Zustand;
- Fig. 11: eine Darstellung wie in Fig. 9 in zusammengefügtem und befestigtem Zustand;
- Fig. 12: ein Detail aus Fig. 11 in etwas größerem Maßstab;
- Fig. 13 bis 15: eines der beiden in Fig. 9 gezeigten Klemmstücke in drei Ansichten;
- Fig. 16: eine Seitenansicht wie in Fig. 13, jedoch von der gegenüberliegenden Seite
- Fig. 17: eine perspektivische Darstellung eines der beiden in Fig. 9 gezeigten Klemmstücke in vergrößertem Maßstab;
- Fig. 18: eine Darstellung wie in Fig. 17, jedoch mit Blick auf die andere Seite.

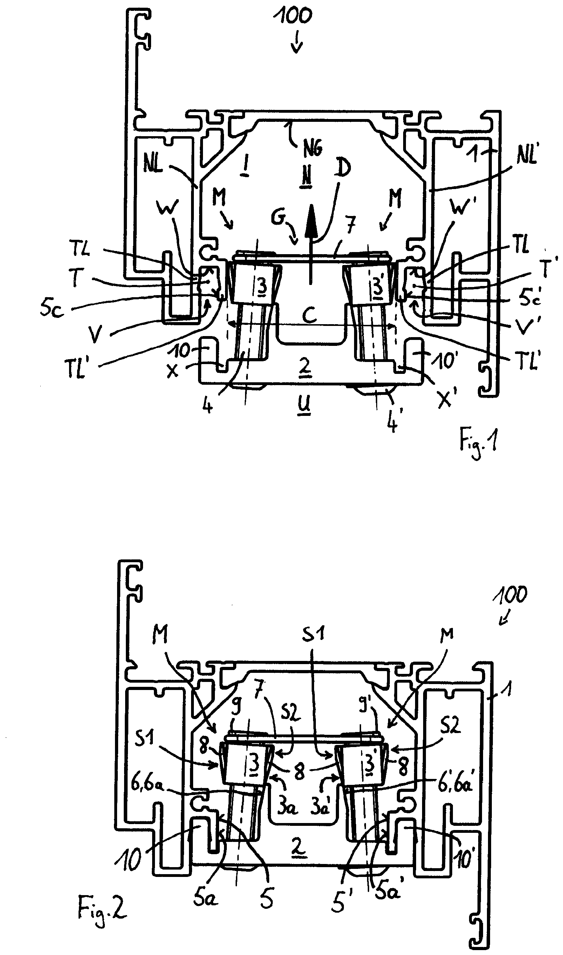

Die Fig. 1 bis 3 zeigen ein jeweils als Ganzes mit 100 bezeichnetes erstes Ausführungsbeispiel eines erfindungsgemäßen Systems.

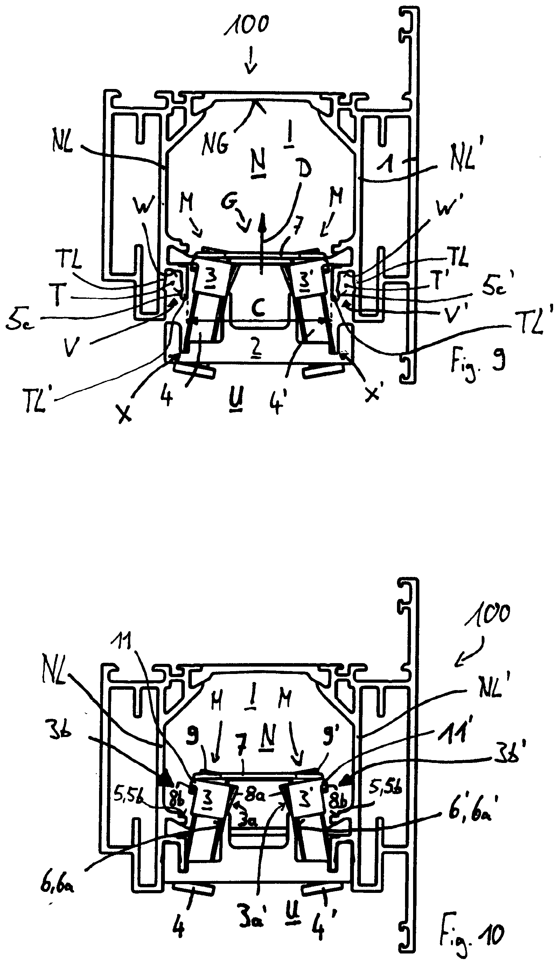

Die Fig. 1 und 9 zeigen die Montagerichtung D des Zusammenfügens von Befestigungsstück 2 und Profil 1 sowie die Breite C der Öffnung G der Nut N des Profils 1. Diese Nut N kann auch als Hauptnut bezeichnet werden.

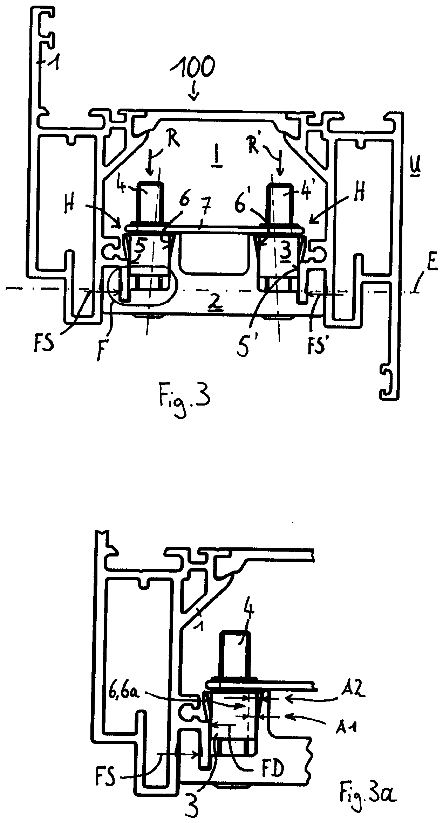

Alle gezeigten Ausführungsbeispiele des erfindungsgemäßen Systems umfassen ein Profil 1 und ein Befestigungsstück 2. Zudem umfassen alle gezeigten Ausführungsbeispiele genau zwei Klemmstücke 3, 3' und genau zwei Befestigungsmittel 4, 4', die mit den Klemmstücken 3, 3' zusammenwirken und als Befestigungsschrauben ausgeführt sind. Die Befestigungsschrauben wirken in allen gezeigten Ausführungsbeispielen mit Gewindebohrungen 3c der Klemmstücke 3, 3' zusammen. Die Kraftrichtung R, R' verläuft bei allen gezeigten Ausführungsbeispielen im montierten Zustand des Systems 100 senkrecht zu der gedachten Ebene E, in der die Öffnung G der Nut N des Profils 1 liegt. Bei allen gezeigten Ausführungsbeispielen stellt das Profil 1 erste Anlageflächen 5, 5' für die Klemmstücke 3, 3' bereit, an denen die Klemmstücke 3, 3' in ihrer Halteposition H (siehe Fig. 3, 6 und 14), anliegen. Bei allen Ausführungsbeispielen sind zudem an dem Befestigungsstück 2 zweite Anlageflächen 6, 6' für die Klemmstücke 3, 3' bereitgestellt.

Alle gezeigten Ausführungsbeispiele umfassen zudem ein elastisches Element 7, das zwischen den Klemmstücken 3, 3' wirkt und diese elastisch aufeinander zu zieht.

Die zweiten Anlageflächen 6, 6' umfassen bei allen Ausführungsbeispielen schräge Führungsflächen 6a, 6a' und die Klemmstücke 3, 3' sind jeweils an ihrer der zweiten Anlagefläche 6, 6' zugewandten Seite 3a, 3a' keilförmig ausgebildet.

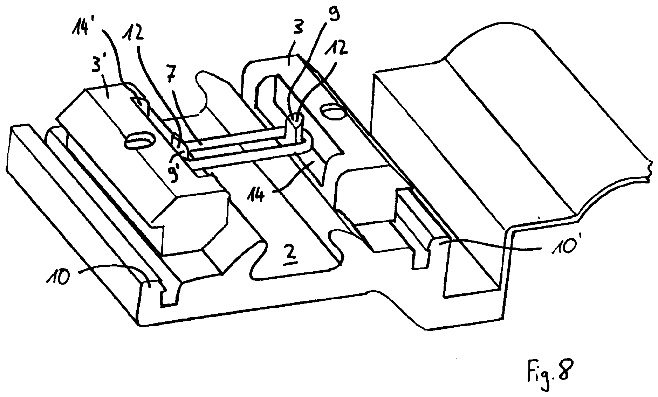

In den in den Fig. 1 bis 7 und 9 bis 18 gezeigten Ausführungsbeispielen sind die schrägen Führungsflächen plan ausgeführt, in dem in Fig. 8 gezeigten Ausführungsbeispiel sind sie konvex.

Das elastische Element 7 ist bei allen Ausführungsbeispielen derart ausgebildet, dass es die Positionierung der Klemmstücke 3, 3' zueinander in eine Montageposition M bewirkt und die Verlagerung der Klemmstücke in eine Halteposition H zulässt. Diese Verlagerung wird bei allen Ausführungsbeispielen dadurch bewirkt, dass, ausgehend von der Position in Fig. 2 beziehungsweise 10 die Befestigungsmittel befestigt, also die Befestigungsschrauben angezogen werden (vergleiche Fig. 2 und 3, beziehungsweise 10 und 11).

Die zweiten Anlageflächen 6, 6' sind so ausgebildet, dass mit ihrer Hilfe die Verlagerung der Klemmstücke 3, 3' von der Montageposition M in die Halteposition H durch Befestigen der Befestigungsmittel bewirkbar ist. Wie ein Vergleich der Fig. 2 und 3 bzw. der Fig. 10 und 11 zeigt, vergrößert sich bei dieser Verlagerung der Abstand der Klemmstücke 3, 3' und es findet eine Verkippung der Klemmstücke 3, 3' statt.

Denn bei dem Anziehen der Befestigungsschrauben gleiten die Klemmstücke 3, 3' an den zweiten Anlageflächen 6, 6' entlang, was eine Vergrößerung des Abstandes der beiden Klemmstücke zueinander und eine Verkippung der Klemmstücke 3, 3' bewirkt.

Wie dies etwa in dem ersten Ausführungsbeispiel gezeigt ist, können die Klemmstücke 3, 3' aller gezeigten Ausführungsbeispiele Zähne 8 aufweisen. Die Zähne des in Fig. 8 gezeigten Ausführungsbeispiels (in den Figuren nicht gezeigt) können gleich oder entsprechend ausgeführt sein, wie die Zähne des in Fig. 1 bis 7 oder Fig. 9 bis 18 gezeigten Ausführungsbeispiels.

Die Klemmstücke 3, 3' aller gezeigten Ausführungsbeispiele können Halterungen 9, 9' für das elastische Element 7 aufweisen.

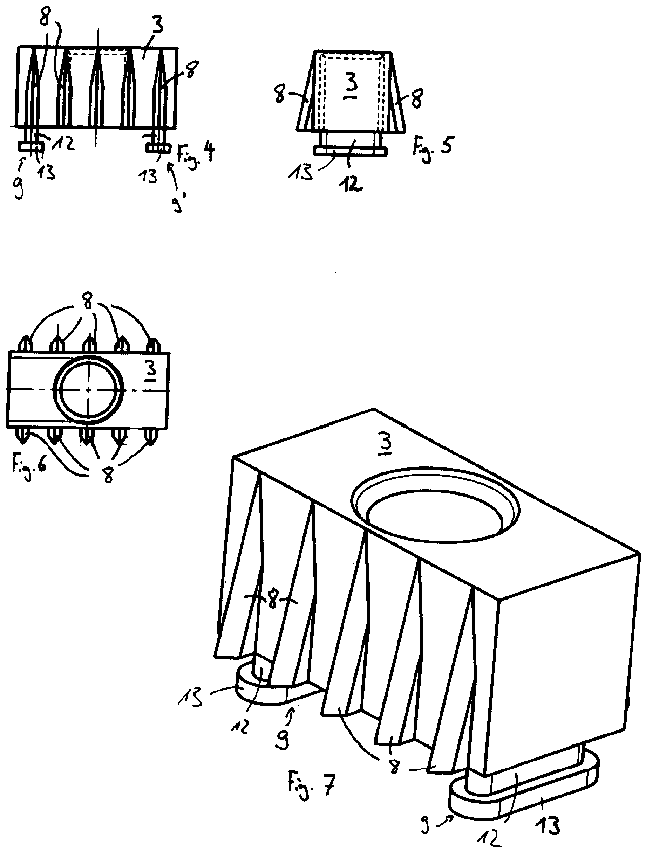

In dem in den Fig. 1 bis 3 gezeigten Ausführungsbeispiel sind die Klemmstücke 3, 3' nicht nur an ihrer den zweiten Anlageflächen 6, 6' zugewandten Seite 3a, sondern auf zwei gegenüberliegenden Seiten S1, S2 keilförmig ausgebildet. Wie aus den Figuren erkennbar, wird diese Keilform ausschließlich durch die Zähne 8 hervorgerufen. Etwa die Fig. 4 bis 7 zeigen, dass das übrige Klemmstück 3 nicht keilförmig, sondern quaderförmig ausgebildet ist. Bei dem in den Fig. 1 bis 3 gezeigten Ausführungsbeispiel verlaufen zumindest Bereiche der ersten Anlageflächen 5, 5' parallel zur Kraftrichtung R, R' der Befestigungsmittel 4, 4', also parallel zur Achse der Befestigungsschrauben in deren Halteposition H. Genauer gesagt verlaufen die ersten Anlageflächen 5, 5' hier vollständig parallel zur Kraftrichtung R, R' der Befestigungsmittel 4, 4'. Die Klemmstücke 3, 3' bewirken in diesem Ausführungsbeispiel in ihrer Halteposition H Spreizkräfte zwischen dem Befestigungsstück 2 und dem Profil 1. Fig. 3 zeigt, dass der Kraftfluss F dieser Spreizkräfte nicht durch das Befestigungsmittel 4 verläuft, das Befestigungsmittel 4 also hiervon entlastet ist und die Spreizkräfte direkt zwischen Befestigungsstück 2 und Profil 1, vermittelt durch ein Klemmstück 3, wirken. In diesem Ausführungsbeispiel liegen die Klemmstücke 3, 3' in ihrer Halteposition H an den ersten Anlageflächen 5, 5' und den zweiten Anlageflächen 6, 6' an.

Die Fig. 1 bis 3 zeigen auch, dass das in diesem Ausführungsbeispiel gezeigte Befestigungsstück 2 zwei Vorsprünge 10, 10' aufweist, die jeweils eine parallel zur Kraftrichtung R der Befestigungsmittel 4, 4' verlaufende Anlagefläche 5a, 5a' des Profils hintergreifen.

Das Befestigungsstück 2 weist genauer gesagt in allen gezeigten Ausführungsbeispielen zwei Vorsprünge 10, 10' auf, die jeweils eine Befestigungsstückanlagefläche 5c, 5c' des Profils 1 hintergreifen. Hierdurch kann etwa ein Spreizen des Profils 1 vermieden sein.

Wie etwa die Fig. 1 und 9 zeigen, weist das Profil 1 aller gezeigten Ausführungsbeispiele zwei Randnuten T, T' auf, die an gegenüberliegenden Seitenwänden NL, NL' der Nut N angeordnet sind. Die Öffnungen V, V' der Randnuten T, T' weisen bezogen auf die Hauptnut N nicht nach innen I, sondern nach außen U. Die Öffnungen V, V' der Randnut weisen von dem Nutgrund NG der Hauptnut N weg. Beide Vorsprünge 10, 10' greifen jeweils in eine Randnut T, T' ein. Die beiden Seitenwände TL, TL' der mindestens einen Randnut sind parallel zueinander und parallel zu den Seitenwänden NL, NL' der Hauptnut N angeordnet.

Die Befestigungsstückanlagefläche 5c, 5c' ist also durch eine Randnut T, T' des Profils 1 bereitgestellt und zwar durch eine der Innenseite der Randnut zugewandten Seite einer Seitenwand TL, TL' der Randnut.

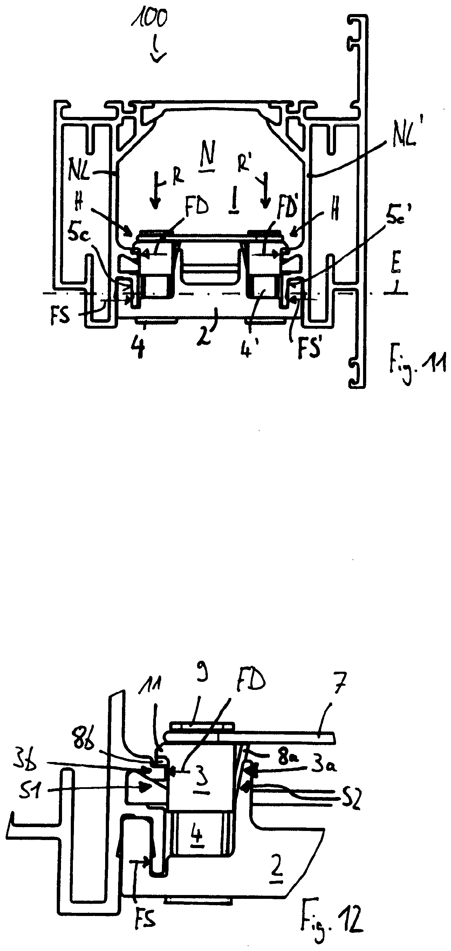

Das Befestigungsstück 2 ist derart ausgeformt, dass es Kräfte FS, FS', die ein Aufspreizen der Hauptnut N verhindern, in das Profil 1 einleitet. Die Kräfte FS, FS', die ein Aufspreizen der Nut verhindern, werden von dem Befestigungsstück 2 mittels der Vorsprünge 10, 10' des Befestigungsstücks in das Profil 1 eingeleitet (siehe etwa Fig. 3, 3a und 12).

Das Befestigungsstück 2 ist zudem derart ausgeformt, dass es auch Kräfte FD, FD', die ein Zusammendrücken der Hauptnut N verhindern, in das Profil 1 einleitet. Die Kräfte FD, FD', die ein Zusammendrücken der Hauptnut N verhindern, werden mittels der Klemmstücke 3, 3' von dem Befestigungsstück 2 in das Profil 1 eingeleitet, siehe etwa Fig. 11.

Die Seitenwände TL, TL' der beiden Randnuten verlaufen senkrecht zu dem Nutgrund W, W' der mindestens einen Randnut T, T'.

Das Befestigungsstücks 2 überbrückt die Öffnung G der Nut N. Es ist zur Befestigung des Befestigungsstücks 2 an dem Profil 1 kein weiteres, diese Nutöffnung G überbrückendes Bauelement vorgesehen.

Das Befestigungsstück 2 weist zwei Befestigungsstücknuten X, X' auf, in die jeweils eine Seitenwand TL' der Randnut T, T' eingreift. Im montierten Zustand des Befestigungsstücks 2 an dem Profil 1 verlaufen die Wände der Befestigungsstücknut X, X' parallel zu den Wänden TL, TL' der beiden Randnuten T, T' des Profils 1 und die Öffnungen der beiden Befestigungsstücknuten X, X' weisen bezogen auf die Hauptnut N nach innen I.

Die Befestigungsstückanlagefläche 5c, 5c' verläuft senkrecht zur Ebene E der Öffnung der Hauptnut N und parallel zur Kraftrichtung R, R' der Befestigungsmittel 4, 4' (siehe etwa Fig. 11).

Beide Randnuten T, T' sind jeweils durch einen "L"-förmigen Vorsprung gebildet, der aus einer Seitenwand NL, NL' der Hauptnut N entspringt. Bereiche beider Seitenwände der Hauptnut bilden jeweils also gleichzeitig eine Seitenwand der Randnuten.

Das Befestigungsstück 2 kann in dem in den Fig. 1 bis 3 gezeigten Ausführungsbeispiel als Beschlagteil, das nicht zur Befestigung eines Bandes dient, ausgebildet sein.

Fig. 3a verdeutlicht, dass der Abstand der als schräge Führungsflächen 6a, 6a' ausgebildeten zweiten Anlageflächen 6, 6' zu dem Befestigungsmittel 4, das mit dem Klemmstück 3 zusammenwirkt, für das sie eine Anlagefläche bereitstellen - im montierten Zustand des Systems - von einem ersten Abstand A1 mit zunehmender Tiefe in das Profil hinein jeweils zu einem zweiten Abstand A2 zunimmt.

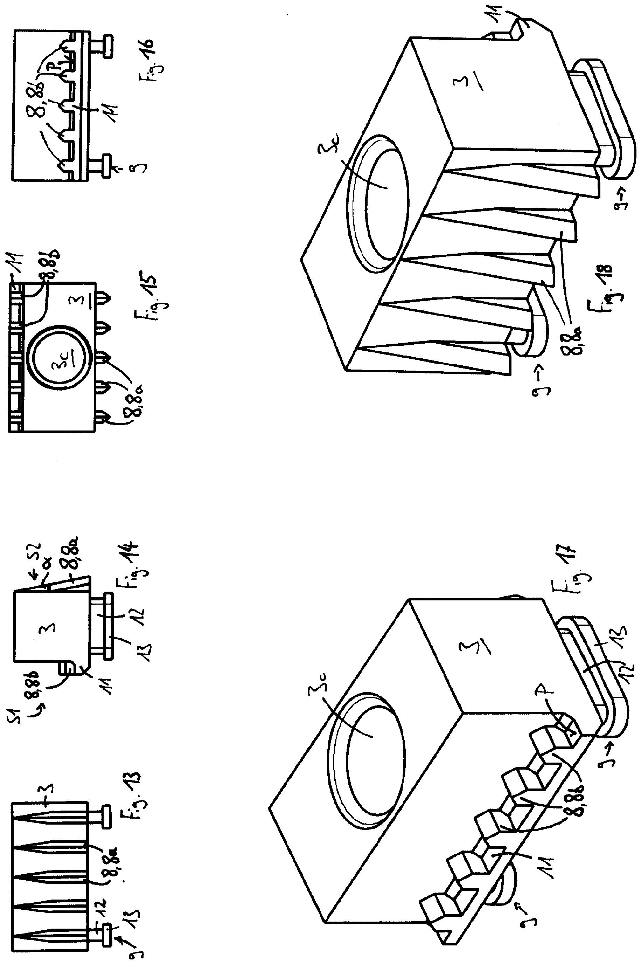

In den Fig. 4 bis 7 ist eines der beiden Klemmstücke 3, 3' des in den Fig. 1 bis 3 gezeigten Ausführungsbeispiels näher gezeigt. Unter anderem sind die Halterungen 9, 9' für das elastische Element 7 erkennbar, die aus einem Vorsprung 12 und einem Kopf 13 dieses Vorsprungs gebildet sind. Wie etwa die Fig. 13, 17 und 18 erkennen lassen, weisen auch die Klemmstücke 3, 3' des dort gezeigten Ausführungsbeispiels derartige Halterungen 9, 9' mit Vorsprung 12 und Kopf 13 auf.

Bei den in den Fig. 8 bis 18 gezeigten Ausführungsbeispielen sind die Klemmstücke 3, 3' lediglich auf ihrer den zweiten Anlageflächen 6, 6' zugewandten Seite 3a, 3a' keilförmig ausgebildet. Auf der gegenüberliegenden Seite, also der den ersten Anlageflächen 5, 5' zugewandten Seiten 3b, 3b', weisen sie eine Schulter 11 auf.

Die ersten Anlageflächen 5, 5' sind in diesen Ausführungsbeispielen so ausgebildet, dass zumindest Bereiche 5b, 5b' senkrecht zur Kraftrichtung R der Befestigungsmittel 4, 4' verlaufen. Wie etwa Fig. 10 und 11 zeigen, hintergreifen die Schultern 11 in der Halteposition H der Klemmstücke 3, 3' diese senkrecht zur Kraftrichtung R, R' verlaufenden Bereiche 5b, 5b' der ersten Anlageflächen 5, 5'. Das Befestigungsstück 2 ist in dem in Fig. 8 gezeigten Ausführungsbeispiel als Teil eines Bandes B ausgebildet. Die Klemmstücke 3, 3' können auch in diesem Ausführungsbeispiel an ihren den zweiten Anlageflächen 6, 6' zugewandten Seiten 3a, 3a' Zähne 8 aufweisen (in Fig. 8 nicht gezeigt).

Bei einer in den Figuren nicht gezeigten Abwandlung aller gezeigten Ausführungsbeispiele ist das elastische Element 7 jeweils weggelassen.

Aus Fig. 8 ist für dieses Ausführungsbeispiel erkennbar, dass die Klemmstücke 3, 3' Halterungen 9, 9' für das elastische Element 7 aufweisen, mit Vorsprüngen 12, die in Vertiefungen 14, 14' der Klemmstücke 3, 3' angeordnet sind, derart, dass sie nicht über die Außenkontur der Klemmstücke hervor stehen. Die Vertiefungen 14, 14' der Klemmstücke 3, 3' sind einander zugewandt.

Der Keilwinkel α der Keilform der Klemmstücke 3, 3' ist etwa in dem in den Fig. 9 bis 18 gezeigten Ausführungsbeispiel kleiner als 45° (siehe etwa Fig. 14).

In dem in den Fig. 9 bis 18 gezeigten Ausführungsbeispiel weisen die Klemmstücke 3, 3' an der zweiten Anlagefläche zugewandten Seite 3a, 3a' Keilzähne 8a auf, die an dieser Seite der Klemmstücke eine Keilform der Klemmstücke bewirken (siehe etwa Fig. 13 bis 16). An der gegenüberliegenden Seite weisen die Klemmstücke 3, 3' eine Schulter 11 auf, mit der Bereiche 5b, 5b' der ersten Anlagefläche 5, 5' hintergriffen sind, die senkrecht zur Kraftrichtung R, R' der Befestigungsmittel 4, 4' verlaufen. Hierdurch kann insbesondere erreicht werden, dass die durch die Befestigungsmittel 4, 4' auf die Klemmstücke 3, 3' ausgeübte Kraft zu einem sehr großen Anteil über die Schulter 11 auf das Profil 1 übertragen wird und dort zu der erwünschten Klemmung führt (siehe etwa Fig. 12).

Bei dem in den Fig. 9 bis 18 gezeigten Ausführungsbeispiel weisen die Klemmstücke 3, 3' auf gegenüberliegenden Seiten S1, S2 Zähne 8 auf. Die Zähne 8 auf gegenüberliegenden Seiten S1, S2 sind voneinander unterschiedlich.

Auf einer Seite der Klemmstücke, und zwar der im montierten Zustand der zweiten Anlagefläche 6, 6' zugewandten Seite 3a, 3a', sind Keilzähne 8a vorgesehen, deren Längserstreckung parallel zur Kraftrichtung R, R' der Befestigungsmittel 4, 4' verläuft und die eine keilförmige Außenkontur aufweisen, derart, dass sie in weiter von dem Befestigungsstück 2 entfernten Bereichen weiter von den Klemmstücken 3, 3' hervorspringen, als in näher an dem Befestigungsstück 2 angeordneten Bereichen. Diese Keilzähne 8a bewirken die auf dieser Seite der Klemmstücke 3, 3' realisierte Keilform der Klemmstücke 3, 3 und sie bewirken Spreizkräfte bzw. es erfolgt mit ihrer Hilfe die Verlagerung der Klemmstücke 3, 3' von der Montageposition M in die Halteposition H.

Auf der gegenüberliegenden Seite und zwar der Seite der Klemmstücke 3, 3', an der sie eine Schulter 11 aufweisen, weisen die Klemmstücke 3, 3' mit Vorteil Senkrechtzähne 8b auf, die keine Keilform der Klemmstücke bewirken. Diese Senkrechtzähne 8b entspringen von der Schulter 11 der Klemmstücke, genauer gesagt aus der Fläche P der Schulter 11, mit der diese zumindest Bereiche der ersten Anlagefläche 5b, 5b' hintergreift, die senkrecht zur Kraftrichtung R, R' der Befestigungsmittel 4, 4' verlaufen. Diese Senkrechtzähne 8b zeigen in Richtung der Kraftrichtung R, R' der Befestigungsmittel 4, 4'. Bei einem Befestigen der Befestigungsmittel 4, 4' werden diese Senkrechtzähne 8b senkrecht auf diese erste Anlagefläche 5b, 5b' zu bewegt und graben sich in diese ein.

### Bezugszeichenliste:

- 100: Befestigungssystem
- 1: Profil
- 2: Befestigungsstück
- 3, 3': Klemmstücke
- 3a, 3a': der zweiten Anlagefläche zugewandte Seite der Klemmstücke
- 3b, 3b': der ersten Anlagefläche zugwandte Seite der Klemmstücke
- 3c: Gewindebohrung
- 4, 4': Befestigungsmittel
- 5, 5': erste Anlageflächen
- 5a, 5a': parallel zur Kraftrichtung verlaufende erste Anlageflächen
- 5b, 5b': senkrecht zur Kraftrichtung verlaufende erste Anlageflächen
- 5c, 5c': Befestigungsstückanlageflächen
- 6, 6': zweite Anlageflächen
- 6a, 6a': Führungsflächen
- 7: elastisches Element
- 8: Zähne
- 8a: Keilzähne
- 8b: Senkrechtzähne
- 9, 9': Halterungen
- 10, 10': Vorsprung des Befestigungsstücks
- 11, 11': Schulter
- 12: Vorsprung
- 13: Kopf
- 14, 14': Vertiefungen

- A1: Abstand
- A2: Abstand
- B: Bandteil
- C: Breite der Öffnung der Nut
- D: Montagerichtung
- E: gedankliche Ebene, in der die Öffnung der Nut liegt
- G: Öffnung der Nut
- F: Kraftfluss
- FS, FS': ein Aufspreizen des Profils verhindernde Kräfte
- FD, FD': ein Zusammendrücken des Profils verhindernde Kräfte
- H: Halteposition
- I: Innen (bezogen auf die Hauptnut)
- M: Montageposition
- N: Nut
- NG: Nutgrund der Hauptnut
- NL, NL': Seitenwand der Nut
- P: Fläche der Schulter
- R, R': Kraftrichtung
- S1, S2: gegenüberliegende Seiten des Klemmstücks
- T, T': Randnuten
- TL, TL': Seitenwand der Randnut
- U: Außen (bezogen auf die Hauptnut)
- V, V': Öffnung der Randnuten
- W, W': Nutgrund der Randnut
- X, X': Befestigungsstücknut

- α: Keilwinkel

## Patentansprüche

1. Befestigungssystem (100) mit einem Profil (1), mit einem Befestigungsstück (2), mit mindestens zwei Klemmstücken (3, 3') und mit mindestens zwei jeweils in einer Kraftrichtung (R, R') wirkenden Befestigungsmitteln (4, 4'), die mit den Klemmstücken (3, 3') zusammenwirken,
wobei das Profil (1) eine Nut (N) aufweist und erste Anlageflächen (5, 5') für die Klemmstücke (3, 3') bereitstellt und das Befestigungsstück (2) zweite Anlageflächen (6, 6') für die Klemmstücke (3, 3') bereitstellt,
und das Profil (1) mindestens eine Anlagefläche (5c, 5c') für das Befestigungsstück (2) bereitstellt und das Befestigungsstück (2) mindestens einen Vorsprung (10, 10') aufweist,
und
das Profil (1) mindestens eine Randnut (T, T') aufweist, die an einer Seitenwand (NL, NL') der Nut (N) angeordnet ist und deren Öffnung (V, V') bezogen auf die Nut (N) nicht nach innen, sondern nach außen (U) weist und der mindestens eine Vorsprung (10, 10') in die mindestens eine Randnut (T, T') eingreift, die Anlagefläche (5c, 5c') für das Befestigungsstück (2) also durch die Randnut (T, T') bereitgestellt ist, **dadurch gekennzeichnet, dass**
der Vorsprung (10, 10') die Anlagefläche (5c, 5c') für das Befestigungsstück (2) hintergreift.

2. Befestigungssystem nach Anspruch 1, **dadurch gekennzeichnet, dass** Kräfte (FS, FS'), die ein Aufspreizen der Nut (N) verhindern, von dem Befestigungsstück (2) mittels des mindestens einen Vorsprungs (10, 10') in das Profil (1) eingeleitet werden und Kräfte (FD, FD'), die ein Zusammendrücken der Nut (N) verhindern, mittels der Klemmstücke (3, 3') von dem Befestigungsstück (2) in das Profil (1) eingeleitet werden und nicht mittels des mindestens einen Vorsprungs (10, 10').

3. Befestigungssystem nach Anspruch 1 oder 2, **dadurch gekennzeichnet, dass** die Nut (N) eine Öffnung (G) aufweist und das Befestigungsstück (2) die Öffnung (G) der Nut (N) überbrückt und zur Befestigung des Befestigungsstücks (2) an dem Profil (1) kein weiteres, diese Nutöffnung (G) überbrückendes Bauelement vorgesehen ist.

4. Befestigungssystem nach einem der Ansprüche 1 bis 3, **dadurch gekennzeichnet, dass** das Befestigungsstück (2) mindestens eine Befestigungsstücknut (X, X') aufweist, in die eine Seitenwand (TL') der Randnut (T, T') eingreift.

5. Befestigungssystem nach einem der Ansprüche 1 bis 4, **dadurch gekennzeichnet, dass** die mindestens eine Anlagefläche (5c, 5c') des Profils (1) für das Befestigungsstück (2) parallel zu den Seitenwänden (NL, NL') der Nut (N) verläuft.

6. Befestigungssystem nach einem der Ansprüche 1 bis 5, **dadurch gekennzeichnet, dass** ein elastisches Element (7) vorgesehen ist, das auf die Klemmstücke (3, 3') wirkt.

7. Befestigungssystem nach einem der Ansprüche 1 bis 6, **dadurch gekennzeichnet, dass** die Klemmstücke (3, 3') jeweils an ihrer der zweiten Anlagefläche (6, 6') zugewandten Seite (3a, 3a') keilförmig ausgebildet sind.

8. Befestigungssystem nach einem der Ansprüche 1 bis 7, **dadurch gekennzeichnet, dass** die Klemmstücke (3, 3') an ihrer der ersten Anlagefläche (5, 5') zugewandten Seite (3b, 3b') eine Schulter (11, 11') aufweisen.

9. Befestigungssystem nach einem der Ansprüche 1 bis 8, **dadurch gekennzeichnet, dass** die Klemmstücke (3, 3') Zähne (8) aufweisen.

10. Befestigungssystem nach Anspruch 9, **dadurch gekennzeichnet, dass** die Klemmstücke (3, 3') an der der zweiten Anlagefläche (6, 6') zugewandten Seite (3a, 3a') Zähne (8, 8a) aufweisen, die an dieser Seite der Klemmstücke (3, 3') eine Keilform der Klemmstücke (3, 3') bewirken oder aufrechterhalten und an der gegenüberliegenden Seite eine Schulter (11) aufweisen.

## Claims

1. Fastening system (100), comprising a profile (1), a fastening piece (2), at least two clamping pieces (3, 3'), and at least two fastening means (4, 4') which each act in a force direction (R, R') and which interact with the clamping pieces (3, 3), the profile (1) having a groove (N) and providing first contact surfaces (5, 5') for the clamping pieces (3, 3') and the fastening piece (2) providing second contact surfaces (6, 6') for the clamping pieces (3, 3'), and the profile (1) providing at least one contact surface (5c, 5c') for the fastening piece (2) and the fastening piece (2) having at least one projection (10, 10'), the profile (1) having at least one peripheral groove (T, T') which is arranged in a side wall (NL, NL') of the groove (N) and the opening (V, V') of which faces not inward but outward (U) with respect to the groove (N), and the at least one projection (10, 10') engaging in the at least one peripheral groove (T, T'), the contact surface (5c, 5c') for the fastening piece (2) thus being provided by the peripheral groove (T, T'), **characterized in that** the projection (10, 10') latches over the contact surface (5c, 5c') for the fastening piece (2).

2. Fastening system according to claim 1, **characterized in that** forces (FS, FS') which prevent the groove (N) from expanding are introduced into the profile (1) by the fastening piece (2) by means of the at least one projection (10, 10'), and forces (FD, FD') which prevent the groove (N) from being compressed are introduced into the profile (1) by the fastening piece (2) by means of the clamping pieces (3, 3') and not by means of the at least one projection (10, 10').

3. Fastening system according to either claim 1 or claim 2, **characterized in that** the groove (N) has an opening (G) and the fastening piece (2) bridges the opening (G) of the groove (N), and no additional component bridging this groove opening (G) is provided for fastening the fastening piece (2) to the profile (1).

4. Fastening system according to any of claims 1 to 3, **characterized in that** the fastening piece (2) has at least one fastening piece groove (X, X') in which a side wall (TL') of the peripheral groove (T, T') engages.

5. Fastening system according to any of claims 1 to 4, **characterized in that** the at least one contact surface (5c, 5c') of the profile (1) for the fastening piece (2) extends parallel to the side walls (NL, NL') of the groove (N).

6. Fastening system according to any of claims 1 to 5, **characterized in that** a resilient element (7) is provided which acts on the clamping pieces (3, 3').

7. Fastening system according to any of claims 1 to 6, **characterized in that** each clamping piece (3, 3') is wedge-shaped on the side (3a, 3a') thereof that faces the second contact surface (6, 6').

8. Fastening system according to any of claims 1 to 7, **characterized in that** the clamping pieces (3, 3'), on the side (3b, 3b') thereof that faces the first contact surface (5, 5'), have a shoulder (11, 11').

9. Fastening system according to any of claims 1 to 8, **characterized in that** the clamping pieces (3, 3') have teeth (8).

10. Fastening system according to claim 9, **characterized in that** the clamping pieces (3, 3') have teeth (8, 8a) on the side (3a, 3a') that faces the second contact surface (6, 6'), which teeth produce or maintain a wedge shape of the clamping pieces (3, 3') on this side of the clamping pieces (3, 3'), and have a shoulder (11) on the opposite side.

## Revendications

1. Système de fixation (100) comportant un profil (1), une pièce de fixation (2), au moins deux pièces de serrage (3, 3') et au moins deux moyens de fixation (4, 4') agissant respectivement dans une direction de force (R, R'), lesquels coopèrent avec les pièces de serrage (3, 3), dans lequel le profil (1) comporte une rainure (N) et fournit des premières surfaces d'appui (5, 5') pour les pièces de serrage (3, 3') et la pièce de fixation (2) fournit des secondes surfaces d'appui (6, 6') pour les pièces de serrage (3, 3'), et le profil (1) fournit au moins une surface d'appui (5c, 5c') pour la pièce de fixation (2) et la pièce de fixation (2) comporte au moins une saillie (10, 10'), et le profil (1) comporte au moins une rainure de bord (T, T'), laquelle est disposée sur une paroi latérale (NL, NL') de la rainure (N) et dont l'ouverture (V, V'), par rapport à la rainure (N), ne pointe pas vers l'intérieur mais vers l'extérieur (U), et l'au moins une saillie (10, 10') vient en prise dans l'au moins une rainure de bord (T, T'), la surface d'appui (5c, 5c') pour la pièce de fixation (2) est ainsi fournie au moyen de la rainure de bord (T, T'), **caractérisé en ce que** la saillie (10, 10') vient en prise derrière la surface d'appui (5c, 5c') pour la pièce de fixation (2).

2. Système de fixation selon la revendication 1, **caractérisé en ce que** les forces (FS, FS'), lesquelles empêchent l'écartement de la rainure (N) sont introduites, depuis la pièce de fixation (2) au moyen d'au moins une saillie (10, 10'), dans le profil (1) et les forces (FD, FD'), lesquelles empêchent la compression de la rainure (N) sont introduites, depuis la pièce de fixation (2) au moyen des pièces de serrage (3, 3') dans le profil (1) et non au moyen de l'au moins une saillie (10, 10').

3. Système de fixation selon la revendication 1 ou 2, **caractérisé en ce que** la rainure (N) comporte une ouverture (G) et que la pièce de fixation (2) ponte l'ouverture (G) de la rainure (N) et que, pour fixer la pièce de fixation (2) au profil (1), aucun autre composant pontant ladite ouverture de rainure (G) n'est situé.

4. Système de fixation selon l'une quelconque des revendications 1 à 3, **caractérisé en ce que** la pièce de fixation (2) comporte au moins une rainure de pièce de fixation (X, X') dans laquelle une paroi latérale (TL') de la rainure de bord (T, T') vient en prise.

5. Système de fixation selon l'une quelconque des revendications 1 à 4, **caractérisé en ce que** l'au moins une surface d'appui (5c, 5c') du profil (1) pour la pièce de fixation (2) s'étend parallèlement aux parois latérales (NL, NL') de la rainure (N).

6. Système de fixation selon l'une quelconque des revendications 1 à 5, **caractérisé en ce qu'**un élément élastique (7) est situé, lequel agit sur les pièces de serrage (3, 3').

7. Système de fixation selon l'une quelconque des revendications 1 à 6, **caractérisé en ce que** les pièces de serrage (3, 3') sont respectivement réalisées sous la forme de coin sur leur côté (3a, 3a') tourné vers la seconde surface d'appui (6, 6').

8. Système de fixation selon l'une quelconque des revendications 1 à 7, **caractérisé en ce que** les pièces de serrage (3, 3') comportent un épaulement (11, 11') sur leur côté (3b, 3b') tourné vers la première surface d'appui (5, 5').

9. Système de fixation selon l'une quelconque des revendications 1 à 8, **caractérisé en ce que** les pièces de serrage (3, 3') comportent des dents (8).

10. Système de fixation selon la revendication 9, **caractérisé en ce que** les pièces de serrage (3, 3') comportent des dents (8, 8a) sur le côté (3a, 3a') tourné vers la seconde surface d'appui (6, 6), lesquelles, sur ce côté des pièces de serrage (3, 3'), provoquent ou maintiennent une forme de coin des pièces de serrage (3, 3') et lesquelles comportent un épaulement (11) sur le côté opposé.
